# EUROPÄISCHE PATENTSCHRIFT

(11) **EP 2 085 134 B1**
(45) Veröffentlichungstag und Bekanntmachung des Hinweises auf die Patenterteilung: **13.06.2012**
(21) Anmeldenummer: 09150991.9
(22) Anmeldetag: 21.01.2009
(51) Int. Cl.: B01D 63/02, B01D 69/08, B01D 67/00, B01D 69/14

(54) **Hohlfaser-Separationsmembranen und Verfahren zu ihrer Herstellung**
Hollow fibre separation membranes and method for their production
Membranes de séparation à fibres creuses et leur procédé de fabrication

(30) Priorität: 01.02.2008 DE 102008000220
(43) Veröffentlichungstag der Anmeldung: 05.08.2009
(73) Patentinhaber: Leibniz-Institut für Polymerforschung Dresden e.V., 01069 Dresden (DE); B. Braun Avitum Saxonia GmbH, 01454 Radeberg (DE)
(72) Erfinder: Zschoche, Stefan, 01109 Dresden (DE); Tischer, René, 01069 Dresden (DE); Baier-Goschütz, Angela, 01819 Berggießhübel (DE)
(74) Vertreter: Rauschenbach, Marion

(56) Entgegenhaltungen:
- DE-A1- 19 715 504
- DE-C1- 19 517 754
- US-A- 5 840 190
- R. TISCHER: "Modifizierung von Membranoberflächen zur Verbesserung der Blutkompatibilität" 4. Juni 2008 (2008-06-04), DISSERTATION , TECHNISCHE UNIVERSITÄT DRESDEN , XP002527020 * Seiten 75-87 *
- XU Z ET AL: "Microporous polypropylene hollow fiber membrane - Part I. Surface modification by the graft polymerization of acrylic acid" JOURNAL OF MEMBRANE SCIENCE, ELSEVIER SCIENTIFIC PUBL.COMPANY. AMSTERDAM, NL, Bd. 196, Nr. 2, 28. Februar 2002 (2002-02-28), Seiten 221-229, XP004328613 ISSN: 0376-7388

## Beschreibung

Die Erfindung bezieht sich auf die Gebiete der Chemie und der Medizin und betrifft Hohlfaser-Separationsmembranen, wie sie beispielsweise für die Blutreinigung und -separation oder andere Flüssigseparationsprozesse eingesetzt werden und ein Verfahren zu ihrer Herstellung.

Bekannte Vorrichtungen zur Blutreinigung und -separation bestehen aus einem Gehäuse, in welchem Hohlfasermembranen vorhanden sind, wobei die Anordnung der Hohlfasermembranen in dem Gehäuse einen separaten Durchfluss der Hohlfasermembranen getrennt von der Umspülung der Hohlfasermembranaußenwandung im Inneren der Dialysatoren realisiert. Dadurch kann beispielsweise ein Bluttransport durch die Hohlfasermembranen erreicht werden und gleichzeitig der Abtransport der über die Hohlfasermembranwandung aus dem Blut ausfiltrierten Bestandteile nach außerhalb der Dialysatoren. Die Klasse der synthetischen Hohlfasermembranen besteht üblicherweise aus einem hydrophoben ersten Polymer und einem hydrophilen zweiten Polymer und diese haben eine asymmetrische Struktur.

Eine derzeit von verschiedenen Herstellern realisierte Ausführung derartiger Hohlfasermembranen verwendet als hydrophobes Polymer Polysulfon oder Polyaryl-Ethersulfon und als hydrophiles Polymer Polyvinylpyrrolidon (EP 0 082 443 B2). Polyvinylpyrrolidon dient hierbei sowohl als Porenbildner und zur Erzeugung einer erhöhten Oberflächenhydrophilie und damit einer besseren Blutkompatibilität.

Eine weitere Methode ist eine Zugabe von weiteren Substanzen zum Polymer-Blend zu einer Erhöhung der Oberflächenhydrophilie an Polysulfon/Polyvinylpyrrolidon- Hohlfasermembranen (US 2004/0045897 A1).

Den vorstehenden Methoden ist gemeinsam, dass die Modifikationen an der Membran bereits während des Herstellungsprozesses der Membran stattfinden. Es sind weiterhin verschiedene Methoden bekannt, mit deren Hilfe durch die Art der Prozessführung in der Membranherstellung und nachträgliche Behandlung der Membranen oder gezielte Beeinflussung von Membranzusammensetzung und -aufbau erwünschte Membraneigenschaften erzeugt werden (DE 10 2004 008 221 B4; US 000005134192 A; US 5,401,410 B; EP 0 168 783 B1; US 5,436,068 B; EP 0 568 054 B1).

Das Dokument US5840190 offenbart Hohlfaser-Separationsmembranen und der Herstellungsverfahren bestehend aus Hohlfasermembranen die u.a. zur Blutreinigung dienen und in gewöhnliche Dialysemodule eingebaut sind. Ein biologisch aktives Molekül wird an ein oberflächenverändertes Polymer gebunden.

Die Aufgabe der vorliegenden Erfindung besteht in der Angabe von Hohlfaser-Separationsmembranen, bei denen nach dem Herstellungsprozess Modifikationen vorgenommen worden sind, die eine Verbesserung der Biokompatibilität ermöglichen, sowie ein einfaches und kostengünstiges Verfahren zu ihrer Herstellung.

Die Aufgabe wird durch die in den Ansprüchen angegebenen Erfindungen gelöst. Vorteilhafte Ausgestaltungen sind Gegenstand der Unteransprüche.

Bei den erfindungsgemäßen Hohlfaser-Separationsmembranen ist die Hohlfasermembraninnenseite mit einer kovalent an die Oberfläche der Hohlfasermembraninnenseite gebundene Polymerschicht versehen, die mindestens teilweise die Oberfläche der Hohlfasermembraninnenseite bedeckt und wobei an der freien Oberfläche der gebundenen Polymerschicht als bioaktive Moleküle p-Aminobenzamidin oder aminterminierte Polyethylenglykole direkt oder über einen Kopplungsmittler gebunden vorliegen.

Vorteilhafterweise sind die Membranen die Hohlfasermembranen eines Dialysators, und noch vorteilhafterweise sind die Hohlfasermembranen in gas- und flüssigkeitsdichten Fixierungen des Dialysators positioniert, die den separaten Zu- und Abfluss von Flüssigkeiten und/oder Gasen in den Innenraum der Hohlfasermembranen realisieren.

Weiterhin vorteilhafterweise bestehen die Hohlfasermembranmaterialien aus einem mit Wasser und/oder einem Lösungsmittel benetzbaren Material.

Ebenfalls vorteilhafterweise bestehen die Hohlfasermembranen aus Polysulfon und Polyvinylpyrrolidon.

Vorteilhaft ist es auch, wenn die Polymerschicht aus Polyacrylsäure und/oder Poly(ethylen-alt-maleinsäure) besteht.

Auch vorteilhaft ist es, wenn die Polymerschicht über Komplexbildung an die Oberfläche der Hohlfasermembraninnenseite gebunden vorliegt.

Von Vorteil ist es auch, wenn die Polymerschicht die freie Oberfläche der Hohlfasermembraninnenseite zu mindestens 60 % bedeckt.

Und auch von Vorteil ist es, wenn die Polymerschicht vollständig die freie Oberfläche der Hohlfasermembraninnenseite bedeckt.

Weiterhin vorteilhaft ist es, wenn die Polymerschicht nach dem Aufbringen auf die freie Oberfläche der Hohlfasermembraninnenseite funktionelle Gruppen aufweist, an die ganz oder teilweise direkt oder über einen Kopplungsmittler bioaktive Moleküle gebunden vorliegen, und noch vorteilhafter ist es, wenn die funktionellen Gruppen Carboxylgruppen und/oder Anhydridgruppen sind.

Ebenfalls von Vorteil ist es, wenn die Polymerschicht eine Schichtdicke von der Dicke einer monomolekulare Schicht bis zu 20 nm Dicke aufweist.

Und auch von Vorteil ist es, wenn die Hohlfaser-Separationsmembran nach dem erfindungsgemäßen Verfahren hergestellt ist.

Bei dem erfindungsgemäßen Verfahren zur Herstellung von Hohlfaser-Separationsmembranen wird die Positionierung von Hohlfaser-Separationsmembranen mit einem separaten Zu- und Abfluss für Flüssigkeiten an die Hohlfaser-Separationsmembraninnenseite heran und einem davon getrennten separaten Zu- und Abfluss für Flüssigkeiten von der Hohlfaser-Separationsmembranaußenseite weg realisiert, nachfolgend werden die Hohlfasermembraninnenseiten mit einer Lösung 5 min bis 5 Stunden in Kontakt gebracht werden und/oder die Lösung mit einer Durchflussgeschwindigkeit von 5 bis 100 ml/min an der Hohlfasermembraninnenseiten entlang geleitet wird, wobei die Lösung mindestens aus einem wässrigen und/oder alkoholischen Lösungsmittel und darin gelösten Polymerschichtmaterialien besteht, nachfolgend wird die Lösung entfernt und während oder nach der Inkontaktbringung mit der Lösung mindestens die Hohlfaser-Separationsmembranen einer Bestrahlung mit β- und/oder γ-Strahlen mit einer maximalen Dosis von 100 kGy unterworfen und danach werden die ganz oder teilweise beschichtete Hohlfasermembraninnenseiten mit bioaktiven Molekülen in Form von p-Aminobenzamidin oder aminterminierten Polyethylenglykolen in Kontakt gebracht.

Ebenfalls vorteilhafterweise werden Membranmaterialien aus einem mit Wasser und/oder einem Lösungsmittel benetzbaren Material eingesetzt.

Weiterhin vorteilhafterweise werden Membranen aus Polysulfon und Polyvinylpyrrolidon eingesetzt.

Und auch vorteilhafterweise werden als Polymermaterialien Polyacrylsäure und/oder Poly(ethylen-alt-maleinsäure) eingesetzt.

Vorteilhaft ist es auch, wenn als Lösungsmittel Wasser eingesetzt wird.

Ebenfalls vorteilhaft ist es, wenn eine Lösung mit einer Konzentration von 0,001 bis 1 Gew.-% eingesetzt wird.

Von Vorteil ist es auch, wenn die Membranen nach der Inkontaktbringung mit der Lösung bestrahlt werden.

Ebenfalls von Vorteil ist es, wenn die Membranen mit β-Strahlung bestrahlt werden.

Weiterhin von Vorteil ist es, wenn die Membranen mit einer Dosis von 10 bis 50 kGy bestrahlt werden, wobei noch vorteilhafterweise die Membranen mit einer Dosis von 20 bis 25 kGy bestrahlt werden.

Vorteilhaft ist es, wenn die bioaktiven Moleküle als Lösung in einem wässrigen oder alkoholischen Lösungsmittel eingesetzt werden.

Ebenfalls vorteilhaft ist es, wenn die Polymerschicht mit der Lösung der bioaktiven Moleküle 5 min bis 5 Stunden in Kontakt gebracht wird.

Weiterhin vorteilhaft ist es, wenn die Lösung der bioaktiven Moleküle mit einer Durchflussgeschwindigkeit von 10 bis 100 ml/min durch die beschichtete Hohlfasermembran hindurchgeleitet wird.

Vorteilhafterweise wird eine 0,00001 bis 0,1 molare Lösung an bioaktiven Molekülen in einem Lösungsmittel eingesetzt.

Und auch vorteilhafterweise wird als Kopplungsmittler Carbodiimide oder Carbonyldiimidazole eingesetzt.

Eine weitere vorteilhafte Ausgestaltung der Erfindung ist es, wenn im Falle des Einsatzes von Poly(ethylen-alt-maleinsäure) als Polymermaterial vor der Reaktion mit den bioaktiven Molekülen eine thermische Behandlung der beschichteten Hohlfaser-Separationsmembranen bei Bedingungen von 110° C für 2h durchgeführt wird.

Die erfindungsgemäße Beschichtung der Oberfläche der Innenseite von Hohlfaser-Separationsmembranen mit Polymermaterialien und nachfolgender Bestrahlung führt zu einer Ausbildung von kovalenten Bindungen zwischen der Polymerschicht und den Oberflächen der Membraninnenseiten. Die erfindungsgemäße Beschichtung ist dadurch dauerhaft. Solche kovalenten Bindungen können beispielsweise durch Pfropfung von Polymermaterialien an Membranmaterialien entstehen. Ebenfalls sind adsorptive Bindungen zwischen Polymermaterialien und Membranmaterialien möglich.

Ein weiterer Vorteil besteht darin, dass diese Beschichtung erst nach dem Herstellungsprozess von Membranen aufgebracht wird, wodurch dieser Prozess unbeeinflusst bleibt. Auch ist dadurch eine wiederholte Beschichtung möglich. Diese nachträgliche Beschichtung ist besonders vorteilhaft, da die schwerer zugängliche Innenseite der Hohlfaser-Separationsmembranen mit dem erfindungsgemäßen Verfahren einfach und problemlos beschichtbar ist. Außerdem erfolgt hierdurch nur eine Beschichtung der für die Biokompatibilität besonders relevanten Hohlfasermembraninnenseiten, so dass die erforderliche Menge Beschichtungsmaterial im Vergleich zu anderen Beschichtungsverfahren reduziert werden kann.

Weiterhin ist mit dem erfindungsgemäßen Verfahren die Schichtdicke variabel einstellbar, ebenso, wie ein gewünschter Multischichtaufbau realisiert werden kann. Da auf diese Weise sehr dünne Schichten, bis zu monomolekulare Schichten, herstellbar sind, wird der Querschnitt der Hohlfasermembranen nahezu nicht verkleinert und die bisher bekannten und realisierten Durchflussmengen an Flüssigkeiten oder Gasen können weiter realisiert werden.

Eine besondere Ausgestaltung der erfindungsgemäßen Lösung besteht darin, dass bioaktive Moleküle permanent und kovalent an die Polymerschicht angekoppelt werden. Diese bioaktiven Moleküle können sich in Abhängigkeit von dem Polymerschichtmaterial entweder direkt an funktionelle Gruppen des Polymerschichtmaterials ankoppeln, oder durch den Einsatz von Kopplungsmittlern. Beispielsweise sind beim Einsatz von Polyacrylsauren als Polymerschichtmaterial Carboxylgruppen als funktionelle Gruppen vorhanden, an die bioaktive Moleküle durch Einsatz eines Kopplungsmittlers ankoppeln können. Wird Poly(ethylen-alt-maleinsäure) als Polymerschichtmaterial eingesetzt, besteht die zusätzliche Möglichkeit durch eine thermische Behandlung Anhydridgruppen zu generieren. An diese können bioaktive Moleküle direkt ohne Einsatz von Kopplungsmittlern angekoppelt werden.

Das Aufbringen der Polymerschichten erfolgt erfindungsgemäß mittels einer Lösung. Dabei wird vorteilhafterweise eine wässrige Lösung der Polymerschichtmaterialien verwendet. Diese Beschichtungslösung wird an die zu beschichtende Membranfläche, beispielsweise in die Hohlfasermembranen eines Dialysators, gebracht. Nach Ausbildung der Polymerschicht in der gewünschten Dicke kann die nun niedriger konzentrierte Lösung oder das Lösungsmittel allein aus den Hohlfasermembranen ausgegossen werden und nachfolgend werden die beschichteten Membranflächen mit Wasser und/oder mit Luft durchgespült. Bei entsprechend gewählter Durchflussgeschwindigkeit kann auch die Polymerschicht während des Durchflusses der Beschichtungslösung gebildet werden.

Die bioaktiven Moleküle, wie beispielsweise aminterminierte Polyethylenglykole oder Thrombininhibitoren, können ebenfalls mittels einer Lösung an die Polymerschicht herangebracht werden. Bei entsprechend gewählter Verweilzeit der Lösung in den Hohlfasermembranen kann die gewünschte Menge an bioaktiven Molekülen mit der Polymerschicht gekoppelt werden. Ebenfalls ist die Ankopplung verschiedener bioaktiven Moleküle durch die Befüllung der Hohlfasermembranen mit mehreren Lösungen gleichzeitig oder/und nacheinander möglich.

Durch die Bestrahlung der Dialysatoren nach der Beschichtung mit den Polymerschichtmaterialien werden die Polymerschichtmaterialien erst dauerhaft an der Oberfläche der beschichteten Membranflächen fixiert. Dies geschieht durch Generierung von reaktiven Zentren sowohl an der Rückgratkette der Polymermaterialien als auch der Membranmaterialien und Ausbildung kovalenter Bindungen. Dies wird durch eine Bestrahlung mit β- oder γ-Strahlen mit einer maximalen Dosis von 100 kGy realisiert, wobei vorteilhafterweise β -Strahlen mit einer Dosis von 10 - 25 kGy eingesetzt werden und ausreichend sind.

Ein weiterer Vorteil der erfindungsgemäßen Lösung besteht darin, dass die erfindungsgemäße Beschichtung der Hohlfasermembranen in den Dialysatoren gleichzeitig mit der Sterilisation erfolgen kann und damit Synergieeffekte auftreten.

Nachfolgend wird die Erfindung an mehreren Ausführungsbeispielen näher erläutert.

### Beispiel 1

Ein Dialysator für Hohlfasermembranen der Länge 260 mm, einem inneren Gehäusedurchmesser von 39 mm weist 10150 aus Polysulfon (PSU) und Polyvinylpyrrolidon (PVP) (EP 0 082 443 B2) bestehende Hohlfasern (Innendurchmesser 200 µm, Wandstärke 40 µm) auf. Diese Hohlfasermembranen sind an den jeweiligen Enden des Dialysators mit einer Vergussmasse aus Polyurethan umschlossen. Die Öffnungen der Hohlfasermembranen bleiben dabei bestehen, so dass ein Durchfluss von Blut durch die Hohlfasermembranen realisiert werden kann. Das Gehäuse des Dialysators ist mit Zu- und/oder Ablauföffnungen für Wasser, Dialysierflüssigkeit oder dergleichen Flüssigkeit versehen, wobei die in dem Gehäuse befindliche Flüssigkeit nur mit der Außenseite der Hohlfasermembranen in Kontakt kommen kann. Die Flüssigkeit transportiert die durch die Hohlfasermembranwandungen hindurch getretenen Stoffe aus dem Gehäuse des Dialysators ab.

Zur Herstellung erfindungsgemäßer Hohlfaser-Separationsmembranen wird 20 min lang eine 0,1-%ige wässrige Lösung aus Polyacrylsäure durch die Hohlfasermembranen des vertikal angeordneten Dialysators von unten gepumpt, wobei mit einer Pumpleistung eine Durchflussgeschwindigkeit von 30 ml/min realisiert wird. Danach werden die Hohlfasermembranen mit destilliertem Wasser 10 min lang mit einer Durchflussgeschwindigkeit von 50 ml/min gespült und nachfolgend, innerhalb von weiteren 20 min, mit einem Luftstrom nochmalig gespült. Anschließend wird der Dialysator auf einer Unterlage in einer Elektronenstrahlanlage fixiert. Dann erfolgt die Elektronenbestrahlung (β-Bestrahlung) mit einer Dosis von 25 kGy, als einmalige Bestrahlung mit einer Energie von 1,0 MeV.

Als Ergebnis des bisherigen Beschichtungsprozesses hat sich auf der freien Oberfläche der Innenseite der Hohlfasermembranen eine Schicht aus Polyacrylsäure mit einer gleichmäßigen Schichtdicke von wenigen nm ausgebildet. Aufgrund der Bestrahlung hat sich eine permanente, kovalente Bindung zwischen der Polyacrylsäure und der Hohlfasermembran aus Polysulfon und Polyvinylpyrrolidon ausgebildet. Diese Schicht ist aufgrund der kovalenten Bindungen sehr stabil und haftet dauerhaft.

Anschließend wird eine wässrige 0,001 M Lösung aus aminterminierten Polyethylenglykol und einem äquimolaren Anteil des Kopplungsmittlers 1-Ethyl-3-(3-dimethylaminopropyl)-carbodiimid innerhalb von 20 min mit einer Durchflussgeschwindigkeit von 30 ml/min durch die Hohlfasermembranen gepumpt.

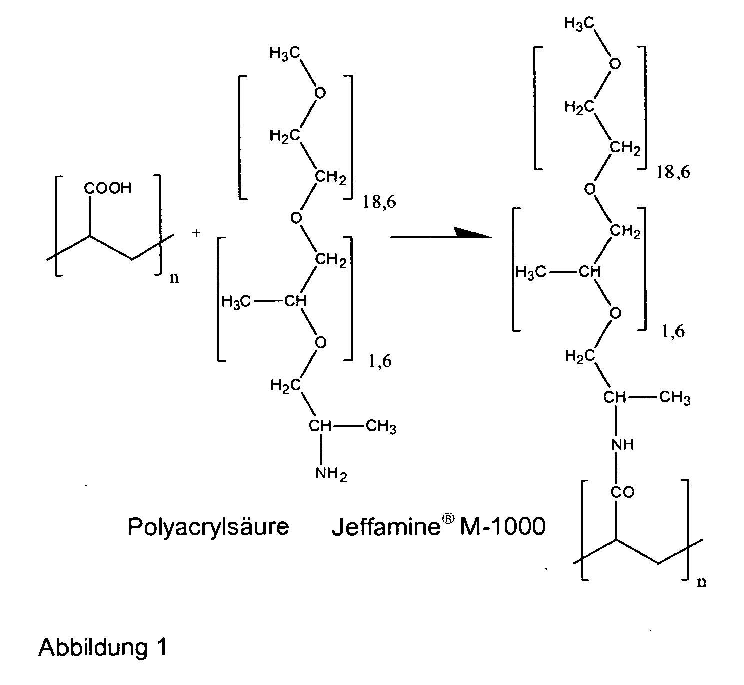

Dadurch hat sich eine die gesamte Oberfläche abdeckende Menge aminterminiertes Polyethylenglykol an die Polyacrylsäureschicht in Form von Amidbindungen direkt angekoppelt und ist dort auch dauerhaft vorhanden.

100 der nach diesem Beispiel hergestellten erfindungsgemäßen HohlfaserMembranen werden nach bekannter Art und Weise mit Polyurethan derart in Kunststoffrohren eingebettet, dass Testmodule mit einer inneren Membranoberfläche von 250 cm² entstehen. Diese werden mit 12,5 ml frischem, haparinisiertem Humanblut (5 IU/ml) bei einer Blutflussrate von 3 ml/min recyclierend durchflossen. Die Konzentration von Thrombozyten und von Thrombin-Antithrombinkomplex (TAT) wird im Vergleich zum Ausgangswert gemessen. Durch die Kopplung von aminterminierten Polyethylenglykol an die inneren Hohlfasermembranoberflächen hat sich die Thrombozytenanzahl im Blut um nur 18 % gegenüber 30 % des Ausgangswertes bei unbeschichteten PSU/PVP-Hohlfasermembranen verringert und der Wert für den Thrombin-Antithrombinkomplex (TAT) von 12,6 ng/ml für unbeschichtete PSU/PVP-Hohlfasermembranen auf 8,5 ng/ml für die erfindungsgemäß beschichteten PSU/PVP-Hohlfasermembranen verbessert.

### Beispiel 2

In einem Dialysator, wie er bereits im Beispiel 1 beschrieben ist, sind 13310 Hohlfasermembranen aus Polyethersulfon enthalten. Der Dialysator wird vertikal positioniert, und die Hohlfasermembranen mit einer 0,1-%ige wässrige Lösung aus Poly(ethylen-alt-maleinsäure) innerhalb von 30 min gefüllt. Danach verbleibt die Lösung noch weitere 10 min in den Hohlfasermembranen und wird danach ausgegossen. Anschließend werden die Hohlfasermembranen mit einem Luftstrom innerhalb von weiteren 20 min getrocknet. Anschließend wird der Dialysator auf einer Unterlage in einer Bestrahlungseinrichtung für γ-Strahlen fixiert. Dann erfolgt die Bestrahlung mit 4 Einzelbestrahlungen je 10 kGy.

Als Ergebnis des bisherigen Beschichtungsprozesses hat sich auf der freien Oberfläche der Innenseite der Hohlfasermembranen eine Schicht aus Poly(ethylen-alt-maleinsäure) mit einer Schichtdicke von maximal 2 nm ausgebildet. Durch die Bestrahlung haben sich permanente, kovalente Bindungen zwischen der Poly(ethylen-alt-maleinsäure) und dem Polysulfon und Polyvinylpyrrolidon ausgebildet. Diese Schicht ist aufgrund der kovalenten Bindungen sehr stabil und haftet dauerhaft. Zur Reaktivierung von Anhydridfunktionen wird der Dialysator für 2h bei 110° C thermisch behandelt.

Anschließend wird eine wässrigen 0,001 M Lösung aus aminterminierten Polyethylenglykol innerhalb von 20 min mit einer Durchflussgeschwindigkeit von 30 ml/min durch die Hohlfasermembranen gepumpt. Dadurch hat sich eine die gesamte Oberfläche abdeckende Menge aminterminiertes Polyethylenglykol an die Poly(ethylen-alt-maleinsäure)-Schicht in Form von Amidbindungen direkt angekoppelt und sind dort auch dauerhaft vorhanden.

Bei den nach der Untersuchungsmethode gemäß Beispiel 2 untersuchten Beschichtungen auf Hohlfasermembranen hat sich durch die Kopplung von aminterminierten Polyethylenglykol die Thrombozytenanzahl um nur 15 % des Ausgangswertes gegenüber 30 % des Ausgangswertes bei unbeschichteten PSU/PVP Hohlfasermembranen verringert und der Wert für den Thrombin-Antithrombinkomplex (TAT) von 13,1ng/ml für unbeschichtete PSU/PVP-Hohlfasermembranen auf 8,0 ng/ml für die erfindungsgemäß beschichteten PSU/PVP-Hohlfasermembranen verbessert.

## Patentansprüche

1. Hohlfaser-Separationsmembranen, bei der die Hohlfasermembraninnenseite mit einer kovalent an die Oberfläche der Hohlfasermembraninnenseite gebundene Polymerschicht versehen ist, die mindestens teilweise die Oberfläche der Hohlfasermembraninnenseite bedeckt und wobei an der freien Oberfläche der gebundenen Polymerschicht als bioaktive Moleküle p-Aminobenzamidin oder aminterminierte Polyethylenglykole oder Thrombininhibitoren direkt oder über einen Kopplungsmittler gebunden vorliegen.

2. Hohlfaser-Separationsmembranen nach Anspruch 1, bei denen die Membranen die Hohlfasermembranen eines Dialysators sind, wobei dabei vorteilhafterweise die Hohlfasermembranen in gas- und flüssigkeitsdichten Fixierungen positioniert sind, die den separaten Zu- und Abfluss von Flüssigkeiten und/oder Gasen in den Innenraum der Hohlfasermembranen realisieren.

3. Hohlfaser-Separationsmembranen nach Anspruch 1, bei denen die Hohlfasermembranmaterialien aus einem mit Wasser und/oder einem Lösungsmittel benetzbaren Material bestehen und/oder aus Polysulfon und Polyvinylpyrrolidon bestehen.

4. Hohlfaser-Separationsmembranen nach Anspruch 1, bei denen die Polymerschicht aus Polyacrylsäure und/oder Poly(ethylen-alt-maleinsäure) besteht.

5. Hohlfaser-Separationsmembranen nach Anspruch 1, bei denen die Polymerschicht die freie Oberfläche der Hohlfasermembraninnenseite zu mindestens 60 % oder vollständig bedeckt

6. Hohlfaser-Separationsmembranen nach Anspruch 1, bei denen die Polymerschicht nach dem Aufbringen auf die freie Oberfläche der Hohlfasermembraninnenseite funktionelle Gruppen aufweist, an die ganz oder teilweise direkt oder über einen Kopplungsmittler die bioaktiven Moleküle gebunden vorliegen, wobei die funktionellen Gruppen vorteilhafterweise Carboxylgruppen und/oder Anhydridgruppen sind.

7. Hohlfaser-Separationsmembranen nach Anspruch 1, bei denen die Polymerschicht eine Schichtdicke von der Dicke einer monomolekulare Schicht bis zu 20 nm Dicke aufweist.

8. Hohlfaser-Separationsmembran nach Anspruch 1, die hergestellt ist nach mindestens einem der Anspruche 9 bis 14.

9. Verfahren zur Herstellung von Hohlfaser-Separationsmembranen, bei dem die Positionierung von Hohlfaser-Separationsmembranen einen separaten Zu- und Abfluss für Flüssigkeiten an die Hohlfaser-Separationsmembraninnenseite heran und einen davon getrennten separaten Zu- und Abfluss für Flüssigkeiten von der Hohlfaser-Separationsmembranaußenseite weg realisiert, nachfolgend die Hohlfasermembraninnenseiten mit einer Lösung 5 min bis 5 Stunden in Kontakt gebracht werden und/oder die Lösung mit einer Durchflussgeschwindigkeit von 5 bis 100 ml/min an der Hohlfasermembraninnenseiten entlang geleitet wird, wobei die Lösung mindestens aus einem wässrigen und/oder alkoholischen Lösungsmittel und darin gelösten Polymerschichtmaterialien besteht, nachfolgend die Lösung entfernt und während oder nach der Inkontaktbringung mit der Lösung mindestens die Hohlfaser-Separationsmembranen einer Bestrahlung mit β-und/oder γ-Strahlen mit einer maximalen Dosis von 100 kGy unterworfen werden und danach die ganz oder teilweise beschichtete Hohlfasermembraninnenseiten mit bioaktiven Molekülen in Form von p-Aminobenzamidin oder aminterminierten Polyethylenglykolen oder Thrombininhibitoren in Kontakt gebracht werden.

10. Verfahren nach Anspruch 9, bei dem Membranmaterialien aus einem mit Wasser und/oder einem Lösungsmittel benetzbaren Material eingesetzt werden und/oder Membranen aus Polysulfon und Polyvinylpyrrolidon eingesetzt werden und/oder als Polymermaterialien Polyacrylsäure und/oder Poly(ethylen-altmaleinsäure) eingesetzt werden.

11. Verfahren nach Anspruch 9, bei dem als Lösungsmittel Wasser eingesetzt wird.

12. Verfahren nach Anspruch 9, bei dem eine Lösung mit einer Konzentration von 0,001 bis 1 Gew.-% eingesetzt wird.

13. Verfahren nach Anspruch 9, bei dem die Membranen nach der Inkontaktbringung mit der Lösung bestrahlt werden und/oder die Membranen mit β-Strahlung bestrahlt werden und/oder die Membranen mit einer Dosis von 10 bis 50 kGy, vorteilhafterweise mit einer Dosis von 20 bis 25 kGy, bestrahlt werden.

14. Verfahren nach Anspruch 9, bei dem die bioaktiven Moleküle als Lösung in einem wässrigen oder alkoholischen Lösungsmittel eingesetzt werden, wobei die Polymerschicht mit der Lösung der bioaktiven Moleküle 5 min bis 5 Stunden in Kontakt gebracht wird und/oder die Lösung der bioaktiven Moleküle mit einer Durchflussgeschwindigkeit von 10 bis 100 ml/min durch die beschichtete Hohlfasermembran hindurchgeleitet wird und/oder eine 0,00001 bis 0,1 molare Lösung an bioaktiven Molekülen in einem Lösungsmittel eingesetzt wird.

15. Verfahren nach Anspruch 9, bei dem als Kopplungsmittler Carbodiimide oder Carbonyldiimidazole eingesetzt werden.

16. Verfahren nach Anspruch 9, bei dem im Falle des Einsatzes von Poly(ethylen-alt-maleinsäure) als Polymermaterial vor der Reaktion mit den bioaktiven Molekülen eine thermische Behandlung bei Bedingungen von 110° C für 2h durchgeführt wird.

## Claims

1. Hollow fibre separation membranes wherein the hollow fibre membrane inside surface is at least partly covered with a polymer layer attached thereto by covalent bonding and wherein p-aminobenzamidine or amine-terminated polyethylene glycols or thrombin inhibitors are present on the free surface of the attached polymer layer as bioactive molecules attached directly or via a coupling agent.

2. Hollow fibre separation membranes according to Claim 1, wherein the membranes are the hollow fibre membranes of a dialyser and advantageously the hollow fibre membranes are positioned in gas- and liquid-tight fixtures that realize the separate in- and outflow of liquids and/or gases into the interior of the hollow fibre membranes.

3. Hollow fibre separation membranes according to Claim 1, wherein the hollow fibre membrane materials consist of a water- and/or solvent-wettable material and/or of polysulfone and polyvinylpyrrolidone.

4. Hollow fibre separation membranes according to Claim 1, wherein the polymer layer consists of polyacrylic acid and/or poly(ethylene-alt-maleic acid).

5. Hollow fibre separation membranes according to Claim 1, wherein at least 60% or all of the free hollow fibre membrane inside surface is covered by the polymer layer.

6. Hollow fibre separation membranes according to Claim 1, wherein the bioactive molecules are wholly or partly attached directly or via a coupling agent to functional groups, advantageously carboxyl groups and/or anhydride groups, on the polymer layer after application thereof to the free hollow fibre membrane inside surface.

7. Hollow fibre separation membranes according to Claim 1, wherein the polymer layer thickness ranges from the thickness of a monomolecular layer up to a 20 nm thickness.

8. Hollow fibre separation membrane according to Claim 1, obtained according to at least one of Claims 9 to 14.

9. Process for producing hollow fibre separation membranes wherein the positioning of hollow fibre separation membranes realizes a separate in- and outflow for liquids to the hollow fibre separation membrane inside surface and a distinct separate in- and outflow for liquids away from the hollow fibre separation membrane outside surface, thereafter the hollow fibre membrane inside surfaces are contacted with a solution for 5 min to 5 hours and/or the solution is passed along the hollow fibre membrane inside surfaces at a flow rate of 5 to 100 ml/min, wherein the solution consists at least of an aqueous and/or alcoholic solvent and polymer layer materials dissolved therein, thereafter the solution is removed and during or after the contacting with the solution at least the hollow fibre separation membranes are irradiated with β- and/or γ-rays at a maximum dose of 100 kGy and subsequently the wholly or partly coated hollow fibre membrane inside surfaces are contacted with bioactive molecules in the form of p-aminobenzamidine or amine-terminated polyethylene glycols or thrombin inhibitors.

10. Process according to Claim 9, wherein membrane materials composed of a water- and/or solvent-wettable material are used and/or membranes composed of polysulfone and polyvinylpyrrolidone are used and/or polyacrylic acid and/or poly(ethylene-alt-maleic acid) are used as polymer materials.

11. Process according to Claim 9, wherein water is used as solvent.

12. Process according to Claim 9, wherein a solution having a concentration of 0.001 to 1 wt% is used.

13. Process according to Claim 9, wherein the membranes are irradiated after the contacting with the solution and/or the membranes are irradiated with β-radiation and/or the membranes are irradiated with a dose of 10 to 50 kGy, advantageously with a dose of 20 to 25 kGy.

14. Process according to Claim 9, wherein the bioactive molecules are used as solution in an aqueous or alcoholic solvent, wherein the polymer layer is contacted with the solution of bioactive molecules for 5 min to 5 hours and/or the solution of bioactive molecules is passed through the coated hollow fibre membrane at a flow rate of 10 to 100 ml/min and/or a 0.00001 to 0.1 molar solution of bioactive molecules in a solvent is used.

15. Process according to Claim 9, wherein carbodiimides or carbonyldiimidazoles are used as coupling agents.

16. Process according to Claim 9, wherein a thermal treatment involving conditions of 110°C for 2h is carried out before the reaction with the bioactive molecules when poly(ethylene-alt-maleic acid) is used as polymer material.

## Revendications

1. Membranes de séparation fibres creuses, dans lesquelles le côté intérieur des membranes fibres creuses est muni d'une couche polymère reliée de manière covalente sur la surface du côté intérieur des membranes fibres creuses, qui recouvre au moins en partie la surface du côté intérieur des membranes fibres creuses, et dans lesquelles de la p-aminobenzamidine ou des polyéthylène glycols à terminaison amine ou des inhibiteurs de thrombine en tant que molécules bioactives sont reliés directement ou par un agent de couplage à la surface libre de la couche polymère reliée.

2. Membranes de séparation fibres creuses selon la revendication 1, dans lesquelles les membranes sont les membranes fibres creuses d'un dialyseur, les membranes fibres creuses étant avantageusement positionnées dans des fixations étanches aux gaz et aux liquides, qui réalisent l'alimentation et l'évacuation séparées de liquides et/ou de gaz dans l'espace intérieur des membranes fibres creuses.

3. Membranes de séparation fibres creuses selon la revendication 1, dans lesquelles les matériaux des membranes fibres creuses sont constitués d'un matériau mouillable avec de l'eau et/ou un solvant et/ou sont constitués de polysulfone et de polyvinylpyrrolidone.

4. Membranes de séparation fibres creuses selon la revendication 1, dans lesquelles la couche polymère est constituée d'acide polyacrylique et/ou de poly(éthylène-alt-acide maléique).

5. Membranes de séparation fibres creuses selon la revendication 1, dans lesquelles la couche polymère recouvre la surface libre du côté intérieur des membranes fibres creuses à hauteur d'au moins 60 % ou en totalité.

6. Membranes de séparation fibres creuses selon la revendication 1, dans lesquelles la couche polymère présente après l'application sur la surface libre du côté intérieur des membranes fibres creuses des groupes fonctionnels, sur lesquels sont reliées les molécules bioactives en totalité ou en partie directement ou par un agent de couplage, les groupes fonctionnels étant avantageusement des groupes carboxyle et/ou des groupes anhydride.

7. Membranes de séparation fibres creuses selon la revendication 1, dans lesquelles la couche polymère présente une épaisseur de couche de l'épaisseur d'une couche monomoléculaire jusqu'à 20 nm d'épaisseur.

8. Membrane de séparation fibre creuse selon la revendication 1, qui est fabriquée selon au moins l'une quelconque des revendications 9 à 14.

9. Procédé de fabrication de membranes de séparation fibres creuses, dans lequel le positionnement des membranes de séparation fibres creuses réalise une alimentation et une évacuation séparées pour des liquides vers le côté intérieur des membranes de séparation fibres creuses et une alimentation et une évacuation séparées dissociées de celles-ci pour des liquides à partir du côté extérieur des membranes de séparation fibres creuses, puis les côtés intérieurs des membranes fibres creuses sont mis en contact avec une solution pendant 5 min à 5 heures et/ou la solution est conduite le long des côtés intérieurs des membranes fibres creuses à une vitesse d'écoulement de 5 à 100 ml/min, la solution étant constituée d'au moins un solvant aqueux et/ou alcoolique et de matériaux de la couche polymère dissous dans celui-ci, puis la solution est éliminée et, pendant ou après la mise en contact avec la solution, au moins les membranes de séparation fibres creuses sont soumises à une exposition à des rayonnements β et/ou y à une dose maximale de 100 kGy, puis les côtés intérieurs des membranes fibres creuses revêtus en totalité ou en partie sont mis en contact avec des molécules bioactives sous la forme de p-aminobenzamidine ou de polyéthylène glycols à terminaison amine ou d'inhibiteurs de thrombine.

10. Procédé selon la revendication 9, dans lequel des matériaux de membrane à base d'un matériau mouillable par de l'eau et/ou un solvant sont utilisés et/ou des membranes en polysulfone et polyvinylpyrrolidone sont utilisées et/ou de l'acide polyacrylique et/ou du poly(éthylène-alt-acide maléique) sont utilisés en tant que matériaux polymères.

11. Procédé selon la revendication 9, dans lequel l'eau est utilisée en tant que solvant.

12. Procédé selon la revendication 9, dans lequel une solution d'une concentration de 0,001 à 1 % en poids est utilisée.

13. Procédé selon la revendication 9, dans lequel les membranes sont exposées à un rayonnement et/ou les membranes sont exposées à un rayonnement β et/ou les membranes sont exposées à un rayonnement à une dose de 10 à 50 kGy, avantageusement à une dose de 20 à 25 kGy, après la mise en contact avec la solution.

14. Procédé selon la revendication 9, dans lequel les molécules bioactives sont utilisées sous la forme d'une solution dans un solvant aqueux ou alcoolique, la couche polymère étant mise en contact avec la solution des molécules bioactives pendant 5 min à 5 heures et/ou la solution des molécules bioactives étant conduite au travers de la membrane fibre creuse revêtue à une vitesse d'écoulement de 10 à 100 ml/min et/ou une solution 0,00001 à 0,1 molaire de molécules bioactives dans un solvant étant utilisée.

15. Procédé selon la revendication 9, dans lequel des carbodiimides ou des carbonyldiimidazoles sont utilisés en tant qu'agent de couplage.

16. Procédé selon la revendication 9, dans lequel, en cas de l'utilisation de poly(éthylène-alt-acide maléique) en tant que matériau polymère, un traitement thermique est réalisé dans des conditions de 110 °C pendant 2 h avant la réaction avec les molécules bioactives.
